# EUROPÄISCHE PATENTSCHRIFT

(11) **EP 2 723 609 B1**
(45) Veröffentlichungstag und Bekanntmachung des Hinweises auf die Patenterteilung: **06.01.2016**
(21) Anmeldenummer: 12728261.4
(22) Anmeldetag: 15.06.2012
(51) Int. Cl.: B60N 2/20, B60N 2/225

(54) **FAHRZEUGSITZ, INSBESONDERE KRAFTFAHRZEUGSITZ**
VEHICLE SEAT, IN PARTICULAR MOTOR VEHICLE SEAT
SIÈGE DE VÉHICULE, EN PARTICULIER SIÈGE DE VÉHICULE À MOTEUR

(30) Priorität: 21.06.2011 DE 102011105360
(43) Veröffentlichungstag der Anmeldung: 30.04.2014
(73) Patentinhaber: Johnson Controls Components GmbH & Co. KG, 67657 Kaiserslautern (DE)
(72) Erfinder: EMRICH, Holger, 66887 Erdesbach (DE)
(74) Vertreter: Finger, Catrin
(86) Internationale Anmeldenummer: PCT/EP2012/061488
(87) Internationale Veröffentlichungsnummer: WO 2012/175428

(56) Entgegenhaltungen:
- DE-B3-102008 061 037
- US-A1- 2002 105 215

## Beschreibung

Die Erfindung betrifft einen Fahrzeugsitz, insbesondere einen Kraftfahrzeugsitz, mit den Merkmalen des Oberbegriffs des Anspruches 1.

Aus der US 6,641,218 B2 ist ein Fahrzeugsitz der eingangs genannten Art bekannt. Wird dessen Lehne aus einer Gebrauchsstellung vorgeschwenkt, so beaufschlagt der lehnenfeste Entriegelungsnocken zwangsläufig den Steuerhebel, welcher die Sitzschienen entriegelt. Wenn eine Nichtgebrauchsstellung erreicht ist, gibt der Entriegelungsnocken den Steuerhebel wieder frei, so dass die Sitzschienen wieder verriegeln.

Die DE 197 15 764 A1 beschreibt einen Neigungseinstellbeschlag mit Freischwenkeinrichtung für Rückenlehnen von Sitzen, insbesondere Kraftfahrzeugsitzen, bei welchem ein lehnenfester, einstellbarer Beschlagteil über eine Ver- und Feststelleinrichtung mit einem sitzteilfesten Beschlagteil verbunden ist, wobei die Ver- und Feststelleinrichtung eine entsprechend der gewünschten Lehnenneigung mittels einer Stellwelle einstellbare Scheibe umfaßt. Diese Scheibe weist zur Bildung der Freischwenkeinrichtung an ihrem Außenumfang ein Zahnsegment auf, in welches eine am lehnenfesten Beschlagteil gelagerte Sperrklinke eingreift, die mit einem im Freigabesinn betätigbaren und im Sperrsinn selbst rückstellenden Steuerhebel im Eingriff ist. Zur Bildung einer kompakten Einrichtung zur Freischwenkung und Vorschiebung des Sitzes zwecks ungehinderten Zuganges des Fonds zweitüriger Personenkraftwagen ist der Steuerhebel mit einem Klinkenhebel gekuppelt, der beim Freischwenken des lehnenfesten Beschlagteiles an einem an der einstellbaren Scheibe gelagerten Auslösehebel im Sinne der Entriegelung einer zwischen Sitzteil und Fahrzeugboden angeordneten Längslagenstelleinrichtung angreift.

Die DE 10 2008 061 037 B3 beschreibt einen Fahrzeugsitz mit einer neigungseinstellbaren Lehne, insbesondere mit elektromotorischer Lehnenneigungseinstellung, der eine "Easy-Entry-Stellung" einnehmen kann, bei welcher der längseinstellbare Fahrzeugsitz in einer vorderen Position angeordnet und die freigeschwenkte Lehne nach vorn geschwenkt ist, einer Lehnenentriegelung für ein Entriegeln der Lehne zum Freischwenken, einer Schienenentriegelung für ein Einstellen der Längsposition des Fahrzeugsitzes und einer Koppelvorrichtung zum Koppeln der Betätigung der Lehnenentriegelung und der Schienenentriegelung für ein Einnehmen der "Easy-Entry-Stellung", wobei Teil der Koppelvorrichtung eine Klinkenanordnung ist, welche einen um eine Achse verschwenkbar angeordneten Hebel aufweist, wobei der Hebel aus zwei relativ zueinander in ihrer Position veränderbaren Bereichen gebildet ist.

Aus der US 2002/0105214 A1 ist ein gattungsgemäßer Sitz mit einer Neigungsverstellung für eine Sitzlehne relativ zum Sitzteil bekannt.

Der Erfindung liegt die Aufgabe zu Grunde, bei einem Fahrzeugsitz der eingangs genannten Art eine höhere Funktionalität zu schaffen. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Die zwei Zustände des Steuerhebels entscheiden, ob die Sitzschienen beim Vorschwenken der Lehne entriegelt werden oder nicht. Mit der Auswahl des Zustandes des Steuerhebels wird so zwischen zwei Funktionen entschieden. Um den Steuerhebel vom deaktivierten Zustand in den aktivierten Zustand zu bringen, ist vorzugsweise eine Hebeleinheit vorgesehen, welche den Steuerhebel entsprechend beaufschlagen kann. Die Hebeleinheit wiederum wird vorzugsweise durch eines oder gegebenenfalls mehrere Betätigungselemente bewegt. Zusätzlich besteht eine Kopplung an die Entriegelung der Beschläge, mittels denen die Lehne am Sitzteil angebracht ist. Wenn nur auf einer Fahrzeugsitzseite ein Beschlag vorgesehen sein sollte, ist auf der anderen Fahrzeugsitzseite ein um die Lehnenachse drehbares Gelenk zwischen Sitzteil und Lehne angebracht. Für ein Vorschwenken der Lehne ohne Entriegelung der Sitzschienen werden die Beschläge mittels eines gesonderten Betätigungselements entriegelt. Die verschiedenen Beaufschlagungen und Kopplungen der relativ zueinander beweglichen Hebel wird vorzugsweise dadurch erreicht, dass die entsprechenden Schwenkbereiche (nämlich für jeden Hebel ein Kreissektor) überlappen, d.h. je nach Winkellage der Hebel berühren sich diese und können nach dem Prinzip einer Verzahnung aufeinander abwälzen.

Im Folgenden ist die Erfindung anhand eines in der Zeichnung dargestellten Ausfühnmgsbeispiels näher erläutert. Es zeigen
- Fig. 1: eine Seitenansicht des Ausführungsbeispiels ohne Polsterung,
- Fig. 2: die Außenansicht des hinteren Endes des Sitzteils mit dem unteren Ende der Lehne,
- Fig. 3: die Innenansicht zu Fig. 2,
- Fig. 4: eine Teilansicht von Fig. 2 beim Entriegeln der Beschläge für den Freischwenkvorgang,
- Fig. 5: eine Fig. 3 entsprechende Ansicht beim Aktivieren des Steuerhebels für den Freischwenkvorgang,
- Fig. 6: eine Fig. 5 entsprechende Ansicht beim Schwenken der Lehne während des Freischwenkvorgangs, und
- Fig. 7: eine Fig. 6 entsprechende Ansicht beim Entriegeln der Sitzschienen während des Freischwenkvorgangs.

Ein Fahrzeugsitz 1, insbesondere ein Kraftfahrzeugsitz für eine hintere, beispielsweise zweite, Sitzreihe eines Kraftfahrzeuges, weist ein Sitzteil 3 und eine relativ zu diesem um eine Lehnenschwenkachse L schwenkbare Lehne 4 auf. Die Anordnung des Fahrzeugsitzes 1 innerhalb des Kraftfahrzeuges und dessen gewöhnliche Fahrtrichtung definieren die verwendeten Richtungsangaben. Mittels Betätigung eines ersten Betätigungselementes 5, beispielsweise eines Handhebels oder einer Griffschlaufe, ist die Neigung der Lehne 4 relativ zum Sitzteil 3 zwischen verschiedenen Gebrauchsstellungen einstellbar. Mittels Betätigung eines zweiten Betätigungselementes 8, beispielsweise eines Handgriffs, ist die Lehne 4 in eine Nichtgebrauchsstellung schwenkbar, beispielsweise eine freigeschwenkte Stellung, in welcher die nach vorne geschwenkte Lehne 4 den Zugang zu einer hinteren Sitzreihe erleichtert. Die Sitzlängsposition des Fahrzeugsitzes 1 ist mittels Sitzschienen 9 einstellbar, welche am Sitzteil 3 vorgesehen sind. Die Sitzschienen 9 werden vorzugsweise auch beim Freischwenkvorgang entriegelt, damit der Fahrzeugsitz 1 als Ganzes nach vorne geschoben werden kann.

Die Neigungseinstellung und der Freischwenkvorgang der Lehne 4 erfolgt mittels Beschlägen 10, mittels denen die Lehne 4 am Sitzteil 3 angebracht ist. Der Beschlag 10 weist zwei Beschlagteile auf, welche relativ zueinander um die Lehnenachse L verdrehbar sind. Eines der beiden Beschlagteile ist an einem Sitzrahmenseitenteil 3a des Sitzteils 3 befestigt, während das andere Beschlagteil an der Struktur der Lehne 4 befestigt ist. Der Beschlag 10 ist vorliegend als Rastbeschlag ausgebildet, wie er beispielsweise in der DE 20 2009 016 989 U1 beschrieben ist, deren diesbezüglicher Offenbarungsgehalt ausdrücklich einbezogen wird. Bei einem derartigen Beschlag 10 sind die zwei Beschlagteile miteinander verriegelbar. Das Entriegeln erfolgt mittels einer Entriegelungswelle 15, die mit der Lehnenachse L fluchtet und um diese drehbar ist. Die Entriegelungswelle 15 greift auf beiden Fahrzeugsitzseiten drehfest (oder mit einem Leerweg in Umfangsrichtung) in jeweils einen im Beschlag 10 zentral angeordneten und drehbar gelagerten Mitnehmer ein, dessen Drehung die Verriegelung im Beschlag 10 öffnet. Das erste Betätigungselement 5 greift an einem einarmigen Beschlaghebel 18 an, welcher drehfest auf der Entriegelungswelle 15 sitzt.

Auf einer Fahrzeugsitzseite ist eine Hebeleinheit 20 um eine parallel zur Lehnenachse L versetzte Drehachse drehbar am Sitzrahmenseitenteil 3a gelagert. Die Hebeleinheit 20 weist einen ersten Antriebsarm 20a auf der Außenseite des Sitzrahmenseitenteils 3a, eine mit der Drehachse der Hebeleinheit fluchtende Verbindungswelle 20b, auf welcher der erste Antriebsarm 20a drehfest sitzt und welche zu der Innenseite des Sitzrahmenseitenteils 3a führt, einen zweiten Antriebsarm 20c, welcher auf der Innenseite des Sitzrahmenseitenteils 3a angeordnet ist und welcher drehfest auf der Verbindungswelle 20b sitzt, und einen Abtriebsarm 20d, welcher einstückig mit dem zweiten Antriebsarm 20c ausgebildet und in einem Winkel von etwas weniger als 90° von diesem absteht. Am freien Ende des zweiten Antriebsarms 20c ist ein drittes Betätigungselement 23 befestigt, vorliegend eine Griffschlaufe. Am freien Ende des ersten Antriebsarms 20a ist ein viertes Betätigungselement 24 befestigt, vorliegend eine Griffschlaufe. Das am oberen Ende der Lehne 4 angeordnete zweite Betätigungselement 8 steht mittels eines Lehnenseils 25, vorzugsweise eines Bowdenzugs, dessen Hülle am Sitzrahmenseitenteil 3a abgestützt ist, in Wirkverbindung mit der Hebeleinheit 20. Vorzugsweise ist das Lehnenseil 25 zusammen mit dem dritten Betätigungselement 23 am zweiten Antriebsarm 20c befestigt. Je nach Anforderung kann das zweite Betätigungselement 8 oder das dritte Betätigungselement 23 oder das vierte Betätigungselement 24 oder mehrere derselben entfallen. Die Hebeleinheit 20 ist so angeordnet, dass der (einen Kreissektor definierende) Schwenkbereich des ersten Antriebsarms 20a mit dem (einen Kreissektor definierenden) Schwenkbereich des Beschlaghebels 18 überlappt.

Ungefähr in der Mitte zwischen der Lehnenachse L und der mit der Verbindungswelle 20b fluchtenden Drehachse der Hebeleinheit 20 ist auf der gleichen Fahrzeugsitzseite ein Steuerhebel 30 um eine parallel zur Lehnenachse L versetzte Drehachse drehbar am Sitzrahmenseitenteil 3a gelagert. Der zweiarmig ausgebildete Steuerhebel 30 weist einen ersten Steuerarm 31 und einen in einem Winkel von etwas mehr als 120° von diesem abstehenden zweiten Steuerarm 32 auf. Am ersten Steuerarm 31 ist ein Schienenseil 35 befestigt, vorzugsweise eines Bowdenzugs, dessen Hülle am Sitzrahmenseitenteil 3a abgestützt ist. Der Steuerhebel 30 steht mittels des Schienenseils 35, in an sich bekannter Weise, in Wirkverbindung mit der Entriegelung der Sitzschienen 9. Der Steuerhebel 30 ist so angeordnet, dass der (einen Kreissektor definierende) Schwenkbereich des ersten Steuerarms 31 mit dem (einen Kreissektor definierenden) Schwenkbereich des Abtriebsarms 20d überlappt. In einem deaktivierten Zustand des Steuerhebels 30 ist der zweite Steuerarm 32 ungefähr tangential zum Beschlag 10 ausgerichtet. In einem aktivierten Zustand des Steuerhebels 30 ist der zweite Steuerarm 32 ungefähr radial auf die Lehnenachse L ausgerichtet.

Auf der gleichen Fahrzeugsitzseite ist ein Entriegelungsnocken 40 vorgesehen, welcher lehnenfest ist, d.h. fest mit der Lehne 4 verbunden ist, beispielsweise indem er an demjenigen Beschlagteil des Beschlags 10 befestigt ist, welches seinerseits an der Lehne 4 befestigt ist. Der Entriegelungsnocken 40 erstreckt sich in Umfangsrichtung über einen Winkel von ungefähr 60°. Die radiale Abmessung des Entriegelungsnockens 40 bezüglich der Lehnenachse L ist so gewählt, dass sein Schwenkbereich mit dem Schwenkbereich des zweiten Steuerarms 32 überlappt. Im aktivierten Zustand des Steuerhebels 30 ragt der zweite Steuerarm 32 in den Schwenkbereich des Entriegelungsnockens 40. Bezogen auf ein Schwenken der Lehne 4 nach vorne, weist der Entriegelungsnocken 40 ein voreilendes Ende und ein nacheilendes Ende auf.

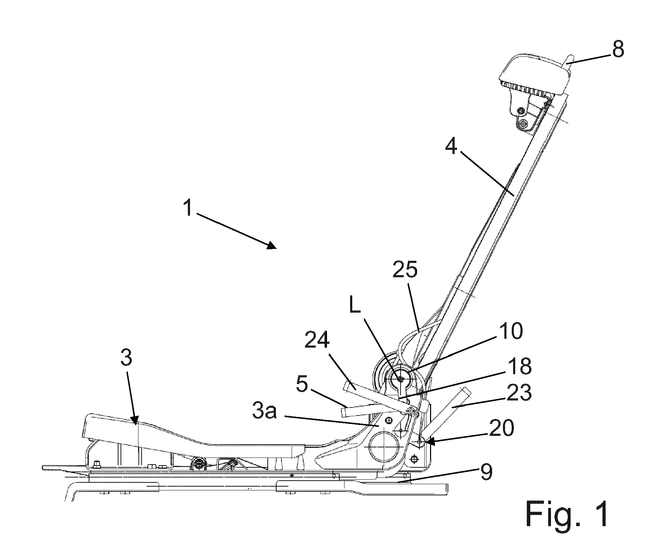

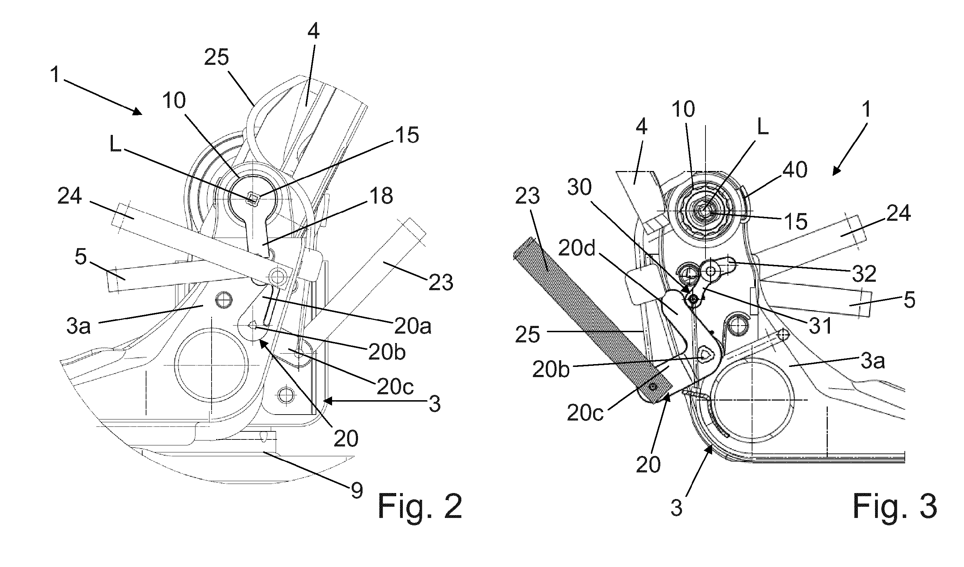

In der Ausgangsstellung der genannten Bauteile befindet sich die Lehne 4 in einer von mehreren möglichen Gebrauchsstellungen, welche zum Sitzgebrauch geeignet sind (Fig. 1 bis 3). Die Neigungseinstellung der Lehne 4 erfolgt mittels Betätigung des ersten Betätigungselements 5. Wird dieses vom Benutzer des Fahrzeugsitzes 1 manuell beaufschlagt, so beaufschlagt es seinerseits den Beschlaghebel 18 und schwenkt diesen. Der schwenkende Beschlaghebel 18 dreht die Entriegelungswelle 15, welche auf beiden Fahrzeugsitzseiten die Beschläge 10 entriegelt. Die Lehne 4 kann nun in eine andere Gebrauchsstellung geschwenkt werden. Wird das erste Betätigungselement 5 losgelassen, verriegeln die Beschläge 10 selbsttätig und drehen dabei die Entriegelungswelle 15 samt Beschlaghebel 18 in die Ausgangsstellung zurück. Der Fahrzeugsitz kann auch von einer Gebrauchsstellung in eine als Tischstellung ausgebildete Nichtgebrauchsstellung überführt werden, welche zur Vergrößerung des Laderaums geeignet ist. Auch dann wird das erste Betätigungselement 5 manuell beaufschlagt, wodurch die Beschläge 10 in der vorbeschriebenen Weise entriegelt werden. Die Lehne 4 wird nun soweit nach vorne geschwenkt, bis sie auf dem Sitzteil 3 aufliegt. Die Rückseite der Lehne 4 ist in dieser Tischstellung ungefähr horizontal ausgerichtet. Während des Schwenkens der Lehne 4 bewegt sich der Entriegelungsnocken 40 im Abstand zum zweiten Steuerarm 32 des Steuerhebels 30 vorbei, welcher sich im deaktivierten Zustand befindet.

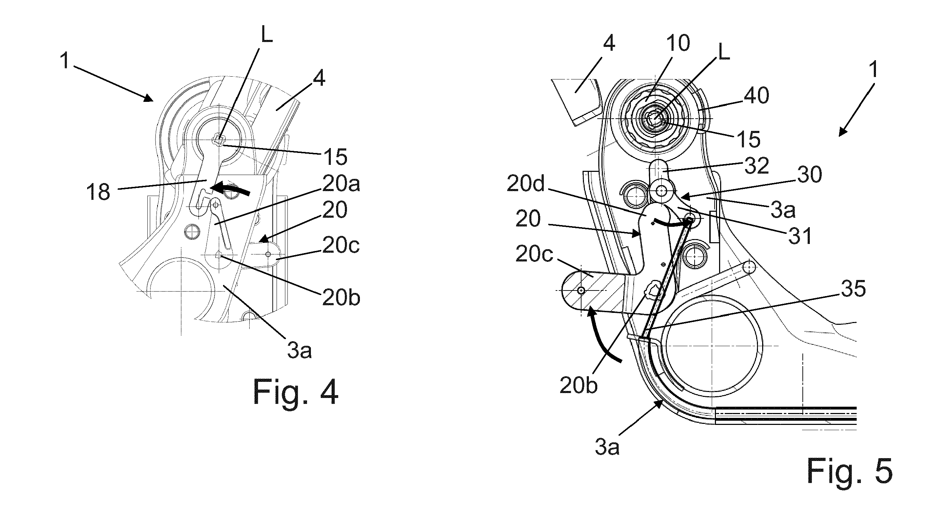

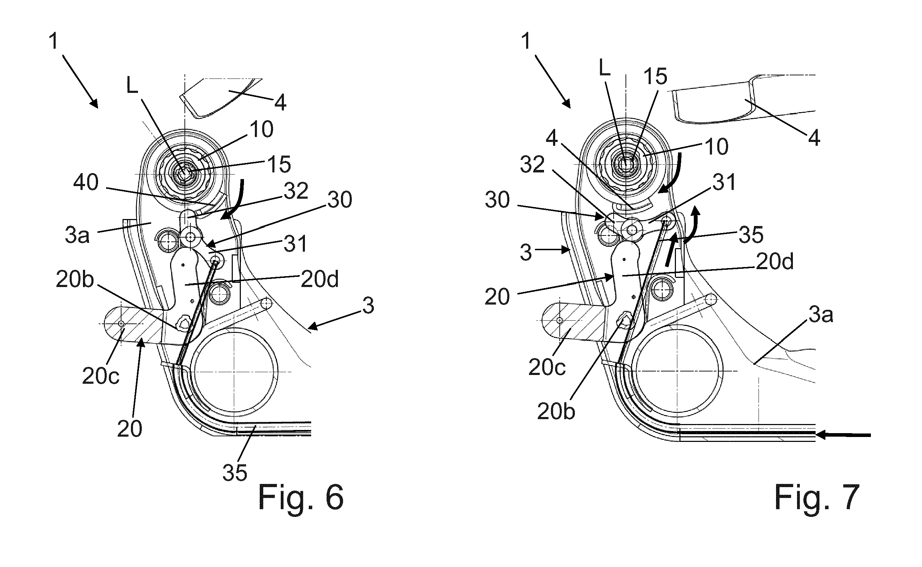

Wenn der Zugang zu einer hinter dem Fahrzeugsitz 1 gelegenen Sitzreihe erleichtert werden soll, wird die Lehne 4 freigeschwenkt (Fig. 4 bis 7). Für das Auslösen des Freischwenkvorgangs hat der Benutzer mehrere Betätigungsmöglichkeiten. Er kann das zweite Betätigungselement 8 am oberen Ende der Lehne 4 oder das im Übergangsbereich zum Sitzteil 3 nach vorne abstehende vierte Betätigungselement 24 oder das dort nach hinten abstehende dritte Betätigungselement 23 manuell beaufschlagen. Letzteres ist für die Insassen der hinter dem Fahrzeugsitz 1 gelegenen Sitzreihe vorgesehen. Das beaufschlagte Betätigungselement 8, 23 oder 24 schwenkt die Hebeleinheit 20. Einerseits beaufschlagt der erste Antriebsarm 20a der schwenkende Hebeleinheit 20 den Beschlaghebel 18, wodurch die Beschläge 10 entriegeln (Fig. 4). Andererseits beaufschlagt der Abtriebsarm 20d der schwenkenden Hebeleinheit 20 den Steuerhebel 30, welcher vom deaktivierten in den aktivierten Zustand wechselt, also aktiviert wird (Fig. 5). Das Schienenseil 35 ist zwar gespannt, jedoch werden die Sitzschienen 9 dabei noch nicht entriegelt. Wird nun die Lehne 4 vorgeschwenkt, so gelangt der Entriegelungsnocken 40 mit seinem voreilenden Ende in Anlage an den aktivierten Steuerhebel 30, also an den zweiten Steuerarm 32 (Fig. 6). Beim weiteren Schwenken der Lehne 4 beaufschlagt der Entriegelungsnocken 40 den Steuerhebel 30, wodurch dieser so weit schwenkt, dass das Schienenseil 35 die Sitzschienen 9 entriegelt (Fig. 7). Nun kann der Fahrzeugsitz 1 als Ganzes verschoben werden.

Das nacheilende Ende des Entriegelungsnockens 40 kann je nach Ausbildung den Steuerhebel 30 passieren oder nicht. Wenn es passieren kann, fehlt eine ausreichende Beaufschlagung des Schienenseils 35, so dass die Sitzschienen 9 verriegeln und ihrerseits das Schienenseil 35 beaufschlagen. Dadurch schwenkt der Steuerhebel 30 soweit zurück, bis er wieder an der Hebeleinheit 20 anliegt. Wenn das beaufschlagte Betätigungselement 8, 23 oder 24 noch gehalten wird, kehrt der Steuerhebel 30 in einen aktivierten Zustand zurück. Wenn das beaufschlagte Betätigungselement 8, 23 oder 24 zwischenzeitlich losgelassen wurde, kehrt der Steuerhebel 30 in den deaktivierten Zustand zurück.

Für das Zurückschwenken der Lehne 4 muss das Betätigungselement 8, 23 oder 24 beaufschlagt sein, so dass die Beschläge 10 (und die Sitzschienen 9) entriegelt sind. Alternativ werden die Beschläge 10 durch eine (interne) Führungsbahn entriegelt gehalten, wie sie beispielsweise in der DE 199 28 148 A1 offenbart ist, deren diesbezüglicher Offenbarungsgehalt ausdrücklich einbezogen wird. Wenn die Lehne 4 zurückgeschwenkt wird, löst sich der Entriegelungsnocken 40 vom Steuerhebel 30, so dass dieser wieder in Anlage an die Hebeleinheit 20 gelangt, sich aber noch im aktiven Zustand befindet. Die Sitzschienen 9 verriegeln wieder. Wenn das beaufschlagte Betätigungselement 8, 23 oder 24 in der gewünschten Gebrauchsstellung der Lehne 4 losgelassen wird, kehrt die Hebeleinheit 20 in ihre Ausgangsstellung und der Steuerhebel 30 in den deaktivierten Zustand zurück.

Außer den vorgenannten Möglichkeiten, die Lehne 4 freizuschwenken, hat der Benutzer auch die Möglichkeit eines Freischwenkens ohne Verschieben des Fahrzeugsitzes 1 als Ganzes, indem er das erste Betätigungselement 5 beaufschlagt. Der Vorgang entspricht dann der Neigungseinstellung der Lehne 4.

### Bezugszeichenliste

- 1: Fahrzeugsitz
- 3: Sitzteil
- 3a: Sitzrahmenseitenteil
- 4: Lehne
- 5: erstes Betätigungselement
- 8: zweites Betätigungselement
- 9: Sitzschiene
- 10: Beschlag
- 15: Entriegelungswelle
- 18: Beschlaghebel
- 20: Hebeleinheit
- 20a: erster Antriebsarm
- 20b: Verbindungswelle
- 20c: zweiter Antriebsarm
- 20d: Abtriebsarm
- 23: drittes Betätigungselement
- 24: viertes Betätigungselement
- 25: Lehnenseil
- 30: Steuerhebel
- 31: erster Steuerarm
- 32: zweiter Steuerarm
- 35: Schienenseil
- 40: Entriegelungsnocken
- L: Lehnenachse

## Patentansprüche

1. Fahrzeugsitz, insbesondere Kraftfahrzeugsitz, mit einem Sitzteil (3), einer Lehne (4), welche um eine Lehnenachse (L) schwenkbar am Sitzteil (3) angebracht ist, Sitzschienen (9) zur Einstellung der Sitzlängsposition des Fahrzeugsitzes (1), welche am Sitzteil (3) vorgesehen sind, einem Steuerhebel (30) zum Entriegeln der Sitzschienen (9), welcher am Sitzteil (3) schwenkbar gelagert ist, und einem lehnenfesten Entriegelungsnocken (40) zum Beaufschlagen des Steuerhebels (30), **dadurch gekennzeichnet, dass** der Steuerhebel (30) einen deaktivierten Zustand, in welchem sich der Entriegelungsnocken (40) während des Schwenkens der Lehne (4) im Abstand am Steuerhebel (30) vorbeibewegt, und einen aktivierten Zustand, in welchem der Entriegelungsnocken (40) während des Schwenkens der Lehne (4) in Anlage an den Steuerhebel (30) gelangt und diesen beaufschlagt, aufweist, wobei der Steuerhebel (30) einen ersten Steuerarm (31), dessen Beaufschlagung den Steuerhebel (30) vom deaktivierten Zustand in den aktivierten Zustand bringt, und einen zweiten Steuerarm (32), der im aktivierten Zustand in den Schwenkbereich des Entriegelungsnockens (40) ragt, aufweist.

2. Fahrzeugsitz nach Anspruch 1, **dadurch gekennzeichnet, dass** die Lehne (4) mittels zweier Beschläge (10) oder mittels eines Beschlags (10) und eines Gelenks schwenkbar am Sitzteil (3) angebracht ist, wobei die vorgesehenen Beschläge (10) mittels einer um die Lehnenachse (L) drehbaren Entriegelungswelle (15) entriegelbar sind.

3. Fahrzeugsitz nach Anspruch 2, **dadurch gekennzeichnet, dass** ein erstes Betätigungselement (5) vorgesehen ist, dessen Betätigung einen Beschlaghebel (18) beaufschlagt, welcher die Entriegelungswelle (15) dreht.

4. Fahrzeugsitz nach Anspruch 3, **dadurch gekennzeichnet, dass** bei Betätigung des ersten Betätigungselements (5) der Steuerhebel (30) im deaktivierten Zustand bleibt.

5. Fahrzeugsitz nach einem der vorhergehenden Ansprüche, **dadurch gekennzeichnet, dass** der Steuerhebel (30) sich in der Ausgangsstellung und bei der Neigungseinstellung der Lehne (4) im deaktivierten Zustand und beim Freischwenkvorgang der Lehne (4) im aktivierten Zustand befindet.

6. Fahrzeugsitz nach einem der vorhergehenden Ansprüche, **dadurch gekennzeichnet, dass** eine Hebeleinheit (20) am Sitzteil (3) schwenkbar gelagert ist, welche einen Abtriebsarm (20d) aufweist, der beim Schwenken der Hebeleinheit (20) aus der Ausgangsstellung den Steuerhebel (30) vom deaktivierten Zustand in den aktivierten Zustand bringt.

7. Fahrzeugsitz nach Anspruch 3 und 6, **dadurch gekennzeichnet, dass** die Hebeleinheit (20) einen ersten Antriebsarm (20a) aufweist, mittels dessen die Hebeleinheit (20) beim Schwenken aus der Ausgangsstellung den Beschlaghebel (18) beaufschlagt.

8. Fahrzeugsitz nach Anspruch 6 oder 7, **dadurch gekennzeichnet, dass** die Hebeleinheit (20) einen zweiten Antriebsarm (20c) aufweist, mit welchem ein zweites Betätigungselement (8) in Wirkverbindung steht, um bei einer Betätigung des zweiten Betätigungselements (8) die Hebeleinheit (20) zu schwenken.

9. Fahrzeugsitz nach Anspruch 7 oder 8, **dadurch gekennzeichnet, dass** ein drittes Betätigungselement (23) vorgesehen ist, welches in Wirkverbindung mit dem ersten Antriebsarm (20a) oder dem zweiten Antriebsarm (20c) steht, um bei einer Betätigung des dritten Betätigungselements (23) die Hebeleinheit (20) zu schwenken.

## Claims

1. Vehicle seat, in particular a motor vehicle seat, having a seat member (3), a backrest (4) which is fitted to the seat member (3) so as to be pivotable about a backrest axis (L), seat rails (9) which are for adjusting the longitudinal seat position of the vehicle seat (1) and which are provided on the seat member (3), a control lever (30) which is for unlocking the seat rails (9) and which is pivotably supported on the seat member (3), and an unlocking cam (40) which is secured to the backrest for acting on the control lever (30), **characterized in that** the control lever (30) has a deactivated state in which the unlocking cam (40) moves past the control lever (30) with spacing during the pivoting of the backrest (4), and an activated state in which the unlocking cam (40) moves into abutment with the control lever (30) and acts on it during the pivoting of the backrest (4), wherein the control lever (30) has a first control arm (31), the actuation of which moves the control lever (30) from the deactivated state into the activated state, and a second control arm (32) which protrudes into the pivot range of the unlocking cam (40) in the activated state.

2. Vehicle seat according to Claim 1, **characterized in that** the backrest (4) is pivotably fitted to the seat member (3) by means of two fittings (10) or by means of a fitting (10) and a joint, the fittings (10) provided being able to be unlocked by means of an unlocking shaft (15) which can be rotated about the backrest axis (L).

3. Vehicle seat according to Claim 2, **characterized in that** there is provided a first actuation element (5), the actuation of which acts on a fitting lever (18) which rotates the unlocking shaft (15).

4. Vehicle seat according to Claim 3, **characterized in that**, when the first actuation element (5) is actuated, the control lever (30) remains in the deactivated state.

5. Vehicle seat according to one of the preceding claims, **characterized in that** the control lever (30) is in the deactivated state in the initial position and when the inclination of the backrest (4) is adjusted and, during the pivoting release operation of the backrest (4), is in the activated state.

6. Vehicle seat according to one of the preceding claims, **characterized in that** a lever unit (20) is pivotably supported on the seat member (3) and has an output arm (20d) which, when the lever unit (20) is pivoted from the initial position, moves the control lever (30) from the deactivated state into the activated state.

7. Vehicle seat according to Claims 3 and 6, **characterized in that** the lever unit (20) has a first drive arm (20a) by means of which the lever unit (20) acts on the fitting lever (18) during pivoting from the initial position.

8. Vehicle seat according to Claim 6 or 7, **characterized in that** the lever unit (20) has a second drive arm (20c) to which a second actuation element (8) is operationally connected in order to pivot the lever unit (20) when the second actuation element (8) is actuated.

9. Vehicle seat according to Claim 7 or 8, **characterized in that** there is provided a third actuation element (23) which is operationally connected to the first drive arm (20a) or the second drive arm (20c) in order to pivot the lever unit (20) when the third actuation element (23) is actuated.

## Revendications

1. Siège de véhicule, en particulier siège de véhicule automobile, comprenant une partie de siège (3), un dossier (4) qui est monté sur la partie de siège (3) de manière à pouvoir pivoter autour d'un axe de dossier (L), des rails de siège (9) pour l'ajustement de la position en longueur du siège de véhicule (1), qui sont prévus au niveau de la partie de siège (3), un levier de commande (30) pour déverrouiller les rails de siège (9), lequel est supporté de manière à pouvoir pivoter sur la partie de siège (3) et une came de déverrouillage (40) fixée au dossier pour solliciter le levier de commande (30), **caractérisé en ce que** le levier de commande (30) présente un état désactivé dans lequel la came de déverrouillage (40), pendant le pivotement du dossier (4), se déplace devant le levier de commande (30) à distance de celui-ci, et un état activé dans lequel la came de verrouillage (40), pendant le pivotement du dossier (4), parvient en appui contre le levier de commande (30) et sollicite celui-ci, le levier de commande (30) présentant un premier bras de commande (31) dont la sollicitation amène le levier de commande (30) de l'état désactivé dans l'état activé, et un deuxième bras de commande (32) qui, dans l'état activé, fait saillie dans la zone de pivotement de la came de déverrouillage (40).

2. Siège de véhicule selon la revendication 1, **caractérisé en ce que** le dossier (4) peut être monté au moyen de deux ferrures (10) ou au moyen d'une ferrure (10) et d'une articulation de manière pivotante sur la partie de siège (3), les ferrures prévues (10) pouvant être déverrouillées au moyen d'un arbre de déverrouillage (15) pouvant tourner autour de l'axe de dossier (L).

3. Siège de véhicule selon la revendication 2, **caractérisé en ce qu'**un premier élément d'actionnement (5) est prévu, dont l'actionnement sollicite un levier de ferrure (18) qui fait tourner l'arbre de déverrouillage (15).

4. Siège de véhicule selon la revendication 3, **caractérisé en ce que** lors de l'actionnement du premier élément d'actionnement (5), le levier de commande (30) reste dans l'état désactivé.

5. Siège de véhicule selon l'une quelconque des revendications précédentes, **caractérisé en ce que** le levier de commande (30) se trouve, dans la position de départ et lors de l'ajustement de l'inclinaison du dossier (4), dans l'état désactivé et, lors de l'opération de pivotement libre du dossier (4), dans l'état activé.

6. Siège de véhicule selon l'une quelconque des revendications précédentes, **caractérisé en ce qu'**une unité de levier (20) est supportée de manière pivotante sur la partie de siège (3), laquelle présente un bras de prise de force (20d), qui, lors du pivotement de l'unité de levier (20) hors de la position de départ, amène le levier de commande (30) de l'état désactivé dans l'état activé.

7. Siège de véhicule selon les revendications 3 et 6, **caractérisé en ce que** l'unité de levier (20) présente un premier bras d'entraînement (20a) au moyen duquel l'unité de levier (20) lors du pivotement hors de la position de départ, sollicite le levier de ferrure (18).

8. Siège de véhicule selon la revendication 6 ou 7, **caractérisé en ce que** l'unité de levier (20) présente un deuxième bras d'entraînement (20c), avec lequel un deuxième élément d'actionnement (8) est en liaison fonctionnelle, afin de faire pivoter l'unité de levier (20) lors d'un actionnement du deuxième élément d'actionnement (8).

9. Siège véhicule selon la revendication 7 ou 8, **caractérisé en ce qu'**un troisième élément d'actionnement (23) est prévu, lequel est en liaison fonctionnelle avec le premier bras d'entraînement (20a) ou le deuxième bras d'entraînement (20c) afin de faire pivoter l'unité de levier (20) lors d'un actionnement du troisième élément d'actionnement (23).
